# EUROPÄISCHE PATENTSCHRIFT

(11) **EP 1 529 431 B1**
(45) Veröffentlichungstag und Bekanntmachung des Hinweises auf die Patenterteilung: **11.04.2007**
(21) Anmeldenummer: 04026287.5
(22) Anmeldetag: 05.11.2004
(51) Int. Cl.: A01C 5/06, A01B 61/04

(54) **Sämaschine**
Sowing machine
Semoir

(30) Priorität: 05.11.2003 DE 10352209
(43) Veröffentlichungstag der Anmeldung: 11.05.2005
(73) Patentinhaber: Alois Pöttinger Maschinenfabrik GmbH, A-4710 Grieskirchen (AT)
(72) Erfinder: Rusch, Uwe, 06408 Baalberge (DE); Preimess, Hans-Jörg, 4710 Grieskirchen (AT)
(74) Vertreter: Thoma, Michael

(56) Entgegenhaltungen:
- WO-A-85/05246
- WO-A-99/27766
- DE-A1- 10 259 459

## Beschreibung

Die vorliegende Erfindung betrifft eine Sämaschine mit einer ersten Säschar, die an einem ersten Schwenkarm gelagert ist, einer zweiten Säschar, die an einem zweiten Schwenkarm gelagert ist, sowie mit einer Bodenwalze, die an einem dritten Schwenkarm gelagert ist, wobei die Schwenkarme jeweils um eine im wesentlichen quer zur Fahrtrichtung verlaufende Schwenkachse gelagert sind, und wobei durch einen ersten Lenker der erste Schwenkarm mit dem zweiten Schwenkarm und durch zumindest einen zweiten Lenker der genannte erste Lenker mit dem dritten Schwenkarm gekoppelt ist.

Derartige Sämaschinen, die selbstfahrend ausgebildet oder an einen Schlepper anbaubar sein können, besitzen in der Regel eine Vielzahl von Drillhebeln bzw. an Schwenkarmen gelagerte Säschare sowie mehrere Bodenwalzen bzw. Druckrollen, die ebenfalls an Schwenkarmen gelagert sind. Durch die Schwenkarme verbindende Lenker wird dabei eine parallelogrammartige Koppelung der die Säschare tragenden Schwenkarme miteinander und mit den die Bodenwalzen tragenden Schwenkarmen vorgesehen, so dass die Schwenkbewegungen miteinander synchronisiert bzw. aufeinander abgestimmt und zwangsgesteuert werden. Hierdurch kann erreicht werden, dass die Säschare gleichmäßige Eindringtiefen in den Boden erreichen und die Bodenwalzen mit dem gewünschten Anpressdruck über den Boden geführt werden. Dabei sind bereits verschiedene Ausbildungen der Schwenkarm- und Lenkeranordnung bekannt geworden.

Die WO 99/27766 zeigt eine Sämaschine, bei der die die Säschare tragenden Schwenkarme sowie die die Bodenwalze lagernden Schwenkarme jeweils an separaten Querträgern schwenkbar gelagert sind. Die eine Synchronisierung der Schwenkbewegungen bewirkenden Lenker sind an oberhalb der Schwenkachsen vorgesehenen Schwenkarmabschnitten jeweils gelenkig angelenkt. Hierdurch wird sozusagen eine 1:1-Koppelung der Schwenkbewegungen erreicht.

Die EP 1 234 489 zeigt eine Sämaschine, bei der die die Säschare tragenden Schwenkarme sowie die die Bodenwalze tragenden Schwenkarme ebenfalls an jeweils separaten Querträgern schwenkbar gelagert sind. Die die Koppelung der Schwenkbewegungen bewirkenden Lenker sind mit jeweils einem Ende direkt an dem jeweiligen Schwenkarm angelenkt, während sie mit ihrem anderen Ende an einem gemeinsamen Schwenkhebel angelenkt sind, der wiederum an dem zugehörigen, eine Säschar tragenden Schwenkarm gelagert ist. Hierdurch tritt eine leichte Übersetzung der Schwenkbewegungen der Schwenkarme durch die Lenker ein.

Die DE 101 41 232 A1 zeigt weiterhin eine Sämaschine, bei der die die Säschare tragenden Schwenkarme sowie der Schwenkarm einer vorauslaufenden Bodenwalze durch einen Lenker miteinander gekoppelt sind. Die Schwenkarme der Säschare sind ebenfalls miteinander gekoppelt, so dass an sich eine Zwangssteuerung der Schwenkbewegungen der Schwenkarme erzielt wird. Die Säschare selbst sind jedoch an den Schwenkarmen nicht direkt gelagert, sondern über vorgespannte Schwenkhebel daran gelagert, so dass eine individuelle Höhenanpassung der Säschare ermöglicht ist. Dies ist zwar vorteilhaft dann, wenn über Hindernisse wie Steine oder dergleichen hinweggefahren werden soll. Andererseits ist die Anordnung jedoch relativ aufwendig. Zudem können ungleichmäßige Furchentiefen im normalen, d.h. hindernisfreien Betrieb eintreten.

Aus der WO 85/05246 ist schließlich eine Sämaschine bekannt, bei der die beiden die Säschare tragenden Schwenkarme sowie der Schwenkarm einer nachlaufenden Bodenwalze durch zwei Lenker miteinander gekoppelt sind, wobei die beiden Lenker an einem der Schwenkarme nicht unmittelbar angelenkt, sondern an einem daran befestigten Kipphebel angelenkt sind, durch den eine Bewegung des einen Lenkers in eine gegenläufige Bewegung des anderen Lenkers umgesetzt wird. Hierdurch soll ein individuelles Ausweichen einer Säschar erlaubt werden, wobei gleichzeitig die andere Säschar auf konstanter Furchentiefe gehalten werden soll.

Der vorliegenden Erfindung liegt die Aufgabe zugrunde, eine verbesserte Sämaschine der eingangs genannten Art zu schaffen, die Nachteile des Standes der Technik vermeidet und letzteren in vorteilhafter Weise weiterbildet. Vorzugsweise soll einerseits eine selbsttätige Höhenanpassung der Säschare und der Bodenwalze beispielsweise an Hindernisse im zu bearbeitenden Boden mit einfachen Mitteln erreicht werden, andererseits soll eine gleichmäßige Bodenbearbeitung mit allen Säscharen erreicht werden.

Diese Aufgabe wird erfindungsgemäß durch eine Sämaschine gemäß Patentanspruch 1 gelöst. Bevorzugte Ausgestaltungen der Erfindung sind Gegenstand der Unteransprüche.

Erfindungsgemäß ist also vorgesehen, dass die Schwenkbewegungen der Schwenkarme zwar einerseits aneinander gekoppelt sind, jedoch zwischen den Schwenkarmen relativ zueinander ein Schwenkspiel bzw. ein begrenztes freies Hin- und Herschwenken möglich ist. Der erste Lenker zwischen dem ersten Schwenkarm und dem zweiten Schwenkarm ist derart ausgebildet, dass die ersten und zweiten Schwenkarme über einen begrenzten Schwenkwinkelbereich ohne Zwangssteuerung relativ zueinander schwenkbar und über diesen begrenzten Schwenkwinkelbereich hinaus zwangsgesteuert miteinander sind. Die Lenker sind weiterhin derart ausgebildet, dass die ersten und zweiten Schwenkarme über einen begrenzten Schwenkwinkelbereich ohne Zwangssteuerung relativ zu dem dritten Schwenkarm schwenkbar und über diesen begrenzten Winkelbereich hinaus zwangsgesteuert mit dem dritten Schwenkarm sind. Dabei ist der zweite Lenker unmittelbar an dem ersten Lenker und an dem dritten Schwenkarm angelenkt. Das Schwenkspiel jedes einzelnen Schwenkarms relativ zu den anderen Schwenkarmen erlaubt eine individuelle Höhen- bzw. Bodenkonturanpassung jedes einzelnen Schwenkarms bzw. des daran angelenkten Bodenbearbeitungswerkzeugs. Hierdurch kann rasch und ohne große Trägheiten auf Bodenhindernisse wie Steine, Wurzeln und dergleichen reagiert werden. Andererseits ist eine gleichmäßige Bodenbearbeitung dadurch sichergestellt, dass dieses individuelle Schwenkspiel begrenzt ist. Die Koppelung der Schwenkarme untereinander durch die Lenker zwingt die daran befestigten Bodenbearbeitungswerkzeuge insgesamt in gleichmäßige, gewünschte Arbeitsstellungen relativ zueinander.

Die die Individualbewegungen der Schwenkarme erlaubende Ausbildung der Lenker kann auf unterschiedliche Art und Weise erreicht werden. Gemäß einer bevorzugten Ausführungsform der Erfindung ist der erste Lenker zwischen den die Säschare tragenden Schwenkarmen an dem ersten Schwenkarm und/oder an dem zweiten Schwenkarm über eine begrenzte Wegstrecke verschieblich angelenkt. Hierdurch kann sich sozusagen die effektive Länge des Lenkers, d.h. der Abstand seiner Anlenkpunkte an den Schwenkarmen ändern, wodurch die begrenzte Schwenkbarkeit des einen Schwenkarms relativ zu dem anderen Schwenkarm erreicht ist. Es wäre auch möglich, den genannten ersten Lenker selbst längenveränderlich nach Art eines teleskopierbaren Lenkers auszubilden, der in begrenztem Maße längenveränderlich ist. Im Sinne einer einfachen und robusten Lösung ist es jedoch bevorzugt, den Lenker sowohl an dem ersten Schwenkarm als auch an dem zweiten Schwenkarm verschieblich anzulenken, wobei die Anlenkung vorzugsweise gelenkig ausgebildet ist, um auftretenden Winkelversatz zwischen Lenker und Schwenkarmen ungehindert zuzulassen. Dabei kann in vorteilhafter Weise die Verschiebbarkeit des Anlenkpunktes des Lenkers am jeweiligen Schwenkarm in Längsrichtung des Lenkers vorgesehen sein.

Insbesondere besitzt der erste Lenker in Weiterbildung der Erfindung an seinem ersten und/oder zweiten Ende eine langlochartige Führung, in der ein am ersten bzw. zweiten Schwenkarm befestigter Lagerbolzen verschieblich sitzt. Die stirnseitigen Enden der langlochartigen Führung bilden dabei Begrenzungen für die Verschieblichkeit des Lenkers relativ zum Schwenkarm und damit für die Schwenkbarkeit des Schwenkarms relativ zu dem damit gekoppelten anderen Schwenkarm. Es wäre auch möglich, die Anordnung der langlochartigen Führung mit dem darin verschieblich aufgenommenen Lagerbolzen umzukehren, d.h. den Lagerbolzen am Lenker anzuordnen und die langlochartige Führung im Schwenkarm auszubilden. Die zuvor beschriebene Anordnung mit der langlochartigen Führung im Lenker ist jedoch bevorzugt und vorteilhaft im Sinne einer platzsparenden Ausnutzung der vorhandenen Bauteilgeometrien, da bevorzugt die Verschiebbarkeit in Längsrichtung des Lenkers vorgesehen wird.

Hinsichtlich des zweiten Lenkers zwischen dem ersten Lenker und dem dritten Schwenkarm kann eine entsprechende Ausbildung, insbesondere eine verschiebliche Anlenkung durch eine Langlochführung, vorgesehen werden. Alternativ bzw. zusätzlich ist es denkbar, dass der zweite Lenker in Weiterbildung der Erfindung längenveränderlich nach Art eines Teleskops ausgebildet ist. Die Anlenkung des Lenkers kann gelenkig am ersten Lenker und am dritten Schwenkarm, jedoch unverschieblich ausgebildet sein. Die Relativbewegungen des zweiten Schwenkarms relativ zum dritten Schwenkarm und umgekehrt werden dabei durch die Längenveränderung des zweiten Lenkers erreicht.

Vorteilhafterweise ist dem zweiten Lenker bei längenveränderlicher Ausbildung eine Federeinrichtung zugeordnet, die den dritten Schwenkarm mit der daran befestigten Bodenwalze bzw. Druckrolle relativ zum ersten Lenker, insbesondere zum Boden hin vorspannt. Die Relativbewegungen des dritten die Bodenwalze tragenden Schwenkarms relativ zu den die Säschare tragenden Schwenkarmen ist also nicht völlig frei möglich, sondern nur gegen die Kraft der vorspannenden Federeinrichtung.

Um die Soll- bzw. Normalhöhe der am dritten Schwenkarm befestigten Bodenwalze relativ zu den Säscharen voreinstellen zu können, kann der zweite Lenker vorteilhafterweise eine Längenvoreinstellvorrichtung aufweisen, mit Hilfe derer die Grundlänge des zweiten Lenkers einstellbar ist. Grundlänge meint dabei die Stellung, aus der der Lenker gegen die Vorspannkraft der Federeinrichtung seine Längenänderungen ausführt.

Vorzugsweise ist der zweite Lenker allerdings starr ausgebildet, wobei er einerseits an dem ersten Lenker angelenkt und andererseits an dem dritten Schwenkarm, der die Bodenwalze trägt, angelenkt ist. Die Anlenkung kann dabei an dem ersten Lenker und/oder an dem dritten Schwenkarm über ein Langloch längsverschieblich sein, um die gewünschte begrenzte rotatorische Freigängigkeit der die Säschare tragenden ersten und zweiten Schwenkarme gegenüber dem die Bodenwalze tragenden dritten Schwenkarm zu erreichen. In Weiterbildung der Erfindung allerdings ist der zweite Lenker an dem ersten Lenker und dem dritten Schwenkarm jeweils unverschieblich, jedoch drehbar angelenkt. Die gewünschte begrenzte Freigängigkeit der ersten und zweiten Schwenkarme gegenüber dem dritten Schwenkarm kann dadurch erreicht werden, dass der erste Lenker, an dem der zweite Lenker angelenkt ist, sowohl an dem ersten Schwenkarm als auch an dem zweiten Schwenkarm jeweils über ein Langloch begrenzt längsverschieblich angelenkt ist. Diese Ausführung erreicht eine einfache und robuste Koppelung, die doch die gewünschte begrenzte rotatorische Freigängigkeit der Schwenkarme zueinander sicherstellt.

Alternativ oder zusätzlich zu dieser rotatorisch begrenzt freigängigen Kopplung der Schwenkarme kann eine Höheneinstellvorrichtung vorgesehen sein, mit Hilfe derer die Höhe des Anlenkpunktes des dritten Schwenkarms, der die Bodenwalze trägt, relativ zur Höhe des Anlenkpunktes des ersten und/oder zweiten Schwenkarmes eingestellt werden kann. Hierzu kann in einfacher konstruktiver Ausgestaltung an dem Maschinenrahmen ein Zweischlag angelenkt sein, dessen Verbindungspunkt den Anlenkpunkt des dritten Schwenkarms trägt. Um dessen Höhe einstellen zu können, kann zumindest ein Element des Zweischlags längenveränderlich ausgebildet sein.

Vorteilhafterweise jedoch ist die Höheneinstellvorrichtung verdrehungsfrei arbeitend ausgebildet. Insbesondere kann ein Rahmenabschnitt bzw. ein Querträger, an dem der dritte Schwenkarm mit der daran angelenkten Bodenwalze befestigt ist, durch eine Parallelogrammführung relativ zu einem Rahmenabschnitt, an dem der erste und/oder der zweite Schwenkarm gelagert sind, höheneinstellbar sein. Die Parallelogrammführung kann zwei voneinander beabstandete Parallelogrammlenker aufweisen, die mit den genannten beiden Rahmenabschnitten jeweils drehbar verbunden sind und dabei derart angeordnet und ausgebildet sind, dass der den dritten Schwenkarm tragende Rahmenabschnitt relativ zu dem die beiden anderen Schwenkarme tragenden Rahmenabschnitt auf- und niederbewegbar ist, ohne hierbei eine Drehbewegung auszuführen. Dies besitzt den großen Vorteil, dass ein an dem höheneinstellbaren Rahmenabschnitt befestigter Striegel unabhängig von der jeweiligen Höheneinstellung des besagten Rahmenabschnitts seine Ausrichtung nicht ändert, sondern stets die zum Boden gewünschte Ausrichtung einnimmt.

Nach einer Ausführungsform der Erfindung sind der erste und der zweite Lenker zwei separate Bauteile, die jeweils mit nur zwei Schwenkarmen gekoppelt sind. Nach einer alternativen Ausführungsform der Erfindung können der erste und der zweite Lenker jedoch auch miteinander einstückig ausgebildet sein, so dass ein Lenker mit drei Schwenkarmen gekoppelt ist. Um die gewünschten Relativbewegungen der Schwenkarme zueinander zuzulassen, kann dieser Schwenkarm in der zuvor beschriebenen Weise verschieblich an den Schwenkarmen angelenkt und/oder ggf. auch nur abschnittsweise längenveränderlich ausgebildet sein.

Um der Anlenkung der Lenker an den Schwenkarmen eine lange Lebensdauer zu geben, können vorzugsweise am Schwenkarm Anlenkbolzen vorgesehen sein, die in der jeweiligen Langlochführung verschieblich aufgenommen und in mehreren Drehstellungen in die Langlochführung einsetzbar sind. Um den Bolzen in mehreren Drehstellungen fixieren zu können, kann dieser drehfest mit einem Mehrkantprofilteil, beispielsweise einer Mutter, verbunden sein, die auf einen herkömmlichen Anlenkbolzen aufgeschraubt und festgeschweißt ist. Die Mutter kann - mit dem Anlenkbolzen - in mehreren Drehstellungen am jeweiligen Schwenkarm befestigt werden. Hierdurch kann das jeweilige Mehrkantprofilteil und damit der Anlenkbolzen dann, wenn an den entsprechenden Profilabschnitten des Anlenkbolzens Verschleiß aufgetreten ist, um seinen Teilungswinkel gedreht und in der nächsten Drehstellung wieder eingesetzt werden, so dass unverbrauchte Profilabschnitte des Anlenkbolzens die Führung wieder verschleißfrei sicherstellen.

Die Erfindung wird nachfolgend anhand bevorzugter Ausführungsbeispiele und zugehöriger Zeichnungen näher erläutert. In den Zeichnungen zeigen:
- Fig. 1: eine Seitenansicht einer Sämaschine nach einer ersten bevorzugten Ausführung der Erfindung, die die Säschare und die Bodenwalze in einer theoretischen Standardarbeitsstellung zeigen,
- Fig. 2: die Sämaschine aus Fig. 1 in einer praktischen Standardarbeitsstellung, in der die Säschare unter Vorspannung eine vorbestimmte Tiefenführung erfahren,
- Fig. 3: eine Seitenansicht der Sämaschine aus den vorhergehenden Figuren in einer Arbeitsstellung, in der die zweite Säschar einem Hindernis durch Nachobenschwenken ausweicht, während die erste Säschar sowie die Bodenwalze unbeeinflusst ihre vorgesehene Arbeitsstellung innehaben,
- Fig. 4: eine Seitenansicht der Sämaschine aus den vorhergehenden Figuren, wobei die Bodenwalze einem Hindernis durch Nachobenschwenken ausweicht, wobei das Hindernis so groß ist, dass das Nachobenschwenken der Bodenwalze die Säschare mitnimmt und vom Boden abhebt,
- Fig. 5: eine Seitenansicht einer Sämaschine nach einer weiteren Ausführung der Erfindung, die die Sämaschine in einer praktischen Standardarbeitsstellung mit Tiefenführung der Säschare zeigt,
- Fig. 6: eine Seitenansicht der Sämaschine aus Fig. 5 in einer Arbeitsstellung, in der die erste Säschar einem Hindernis durch Nachobenschwenken ausweicht, während die zweite Säschar und die Bodenwalze in ihren vorgesehenen Arbeitsstellungen verbleiben,
- Fig. 7: eine Seitenansicht der Sämaschine aus den beiden vorhergehenden Figuren, wobei die zweite Säschar einem Hindernis durch Nachobenschwenken ausweicht, während die erste Säschar sowie die Bodenwalze unbeeinflusst in ihrer vorgesehenen Arbeitsstellung sind,
- Fig. 8: eine Seitenansicht der Sämaschine aus den vorhergehenden Figuren, wobei die Bodenwalze einem Hindernis durch Nachobenschwenken soweit ausweicht, dass die Säschare mitgenommen und vom Boden abgehoben werden,
- Fig. 9: die Sämaschine aus den vorhergehenden Figuren in einer theoretischen Grundstellung, wobei die verschiebliche Anlenkung der die Säschare tragenden Schwenkarme in einer ausschnittsweisen vergrößerten Darstellung gezeigt ist,
- Fig. 10: eine Seitenansicht einer Sämaschine nach einer weiteren bevorzugten Ausführung der Erfindung, die die Säschare und die Bodenwalze in einer theoretischen Standardarbeitsstellung zeigen,
- Fig. 11: eine Seitenansicht der Sämaschine aus Fig. 10 in einer Arbeitsstellung, in der die erste Säschar auf ein Hindernis aufgefahren ist und diesem ausweicht, während die zweite Säschar sowie die Bodenwalze unbeeinflusst ihre vorgesehene Arbeitsstellung innehaben, und
- Fig. 12: eine Draufsicht auf die Kopplung der die Säschare tragenden Schwenkarme und des die Bodenwalze tragenden Schwenkarms der Sämaschine aus den Figuren 10 und 11 durch einen ersten Lenker und einen damit verbundenen zweiten Lenker.

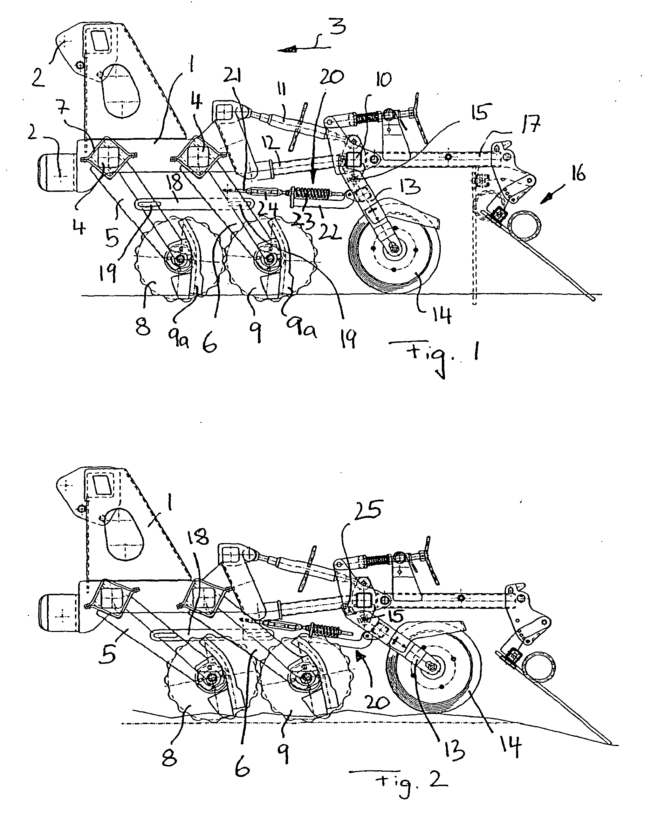

Die in den Figuren gezeigten Sämaschinen besitzen einen Maschinenrahmen 1, der über eine an sich übliche Dreipunktanlenkung 2 an einen Schlepper oder eine selbstfahrende Sävorrichtung anbaubar ist. Der Maschinenrahmen 1 trägt zwei sich quer zur Fahrtrichtung 3 erstreckende Querträger 4, an denen jeweils ein sich schräg nach unten und hinten erstreckender Schwenkarm 5 bzw. 6 angelenkt ist. Wie die Figuren 1 und 2 zeigen, sind die Querträger 4 profiliert und werden von einer mit den Schwenkarmen 5 bzw. 6 verbundenen Gelenkspange 7 umschlossen, die einerseits eine Grundstellung der Schwenkarme 5 bzw. 6 und eine Rückstellung in diese Grundstellung sicherstellt (Figur 1), andererseits jedoch eine Verdrehung der Schwenkarme 5 und 6 unter entsprechender Krafteinwirkung erlaubt (Figur 2). Die von der Gelenkspange 7 gebildete gelenkige Anlenkung der Schwenkarme 5 und 6 sieht also eine Vorspannung bzw. Rückstellung in eine Ausgangsstellung vor.

An ihren frei nach unten auskragenden Enden tragen die ersten und zweiten Schwenkarme 5 und 6 jeweils eine Säschar 8 und 9, die in der gezeichneten Ausführung scheibenförmig ausgebildet ist. Ein zugehöriges Särohr ist ebenfalls an den Schwenkarmen 5 und 6 befestigt.

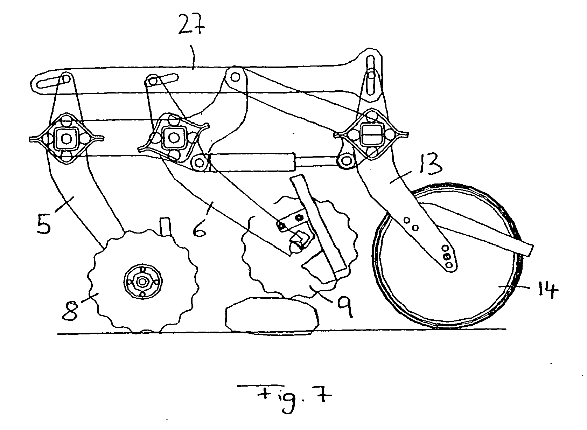

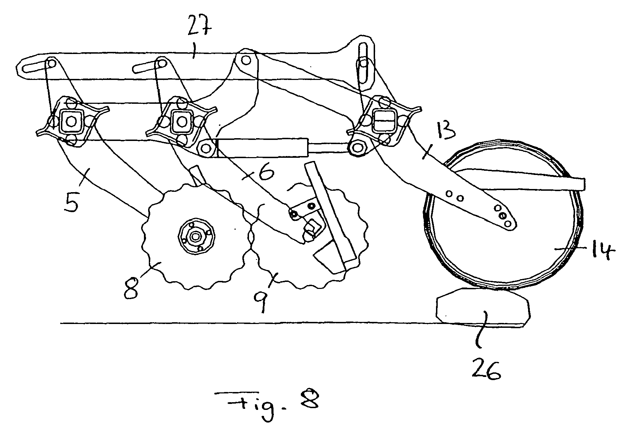

An dem Maschinenrahmen 1 ist weiterhin ein dritter Querträger 10 befestigt, der gemäß den Ausführungen nach den Figuren 1 bis 9 von einen Zweischlag bildenden Trägern 11 und 12 gehalten ist. Wie Figur 1 zeigt, ist der obere Träger 11 längeneinstellbar, so dass die Höhe des Querträgers 10 relativ zu den Querträgern 4 des Maschinenrahmens 1 einstellbar ist. Hierdurch kann die Höhe des am dritten Querträger 10 angelenkten dritten Schwenkarms 13 und der daran befestigten Bodenwalze 14 voreingestellt werden.

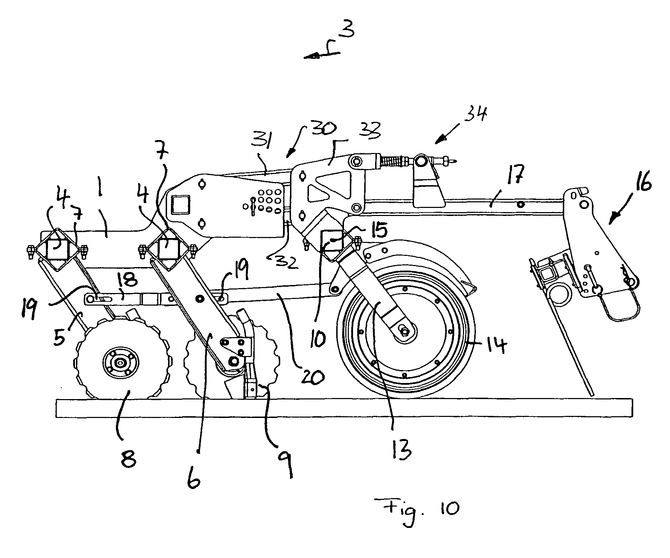

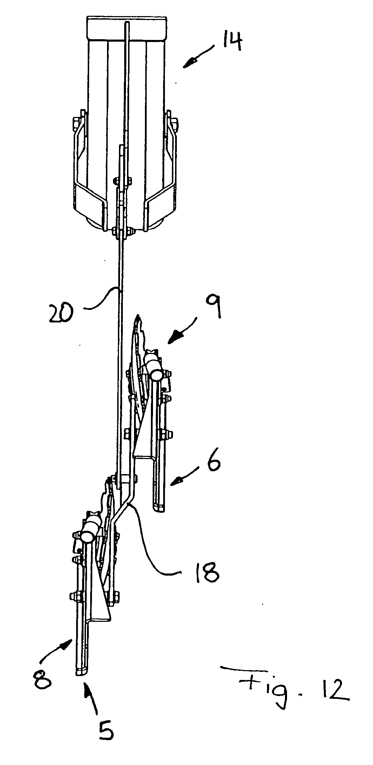

Bei der Ausführung nach den Figuren 10 bis 13 wird die Höheneinstellvorrichtung für den dritten Querträger 10 nicht von einem Zweischlag, sondern von einer Parallelogrammführung 30 gebildet (vgl. Figur 10). Die Parallelogrammführung 30 umfasst zwei Parallelogrammlenker 31 und 32, die im wesentlichen parallel zueinander angeordnet sind und mit ihrem jeweils vorderen Ende gelenkig, d.h. drehbar um eine liegende Querachse angelenkt sind. Mit ihrem jeweils hinteren Ende sind sie um eine liegende Querachse drehbar an dem Rahmenabschnitt 33 angelenkt, an dem der den dritten Schwenkarm 13 tragende Querträger 10 gelagert ist. Die beiden Parallelogrammlenker 31 und 32 können begrenzt auf- und abschwenken, so dass der genannte Rahmenabschnitt 33 mit dem daran angelenkten dritten Schwenkarm 13 aufund niederwippen kann. Die Parallelogrammführung 30 bewirkt hierbei, dass beim Auf- und Niederwippen keine Verdrehung des genannten Rahmenabschnitts 33 erfolgt. Dies ist insbesondere von Vorteil für den an dem besagten Rahmenabschnitt 33 befestigten Striegel 16, der über ein weiteres Rahmenstück 17 der Bodenwalze 14 nachlaufend gelagert ist und in gewünschter Ausrichtung über den Boden geführt wird. Wie Figur 10 zeigt, kann das besagte weitere Rahmenstück 17 selbst wiederum höheneinstellbar sein über eine Höheneinstellvorrichtung 34 (vgl. Figur 10).

Der dritte Schwenkarm 13 ist um eine sich quer zur Fahrtrichtung erstreckende Schwenkachse 15 schwenkbar an dem Querträger 10 gelagert und erstreckt sich ebenfalls von seinem Anlenkpunkt aus schräg nach unten und hinten. Die Bodenwalze 14 kann als mehrgliedrige Packerwalze ausgebildet sein. Es versteht sich, dass sie durch mehrere parallel geschaltete Schwenkarme gehalten sein kann. Die Schwenkachse 15 des dritten Schwenkarms 13 ist parallel zu den Schwenkachsen der ersten und zweiten Schwenkarme 5 und 6.

Wie die Figuren 1 bis 4 zeigen, ist der erste Schwenkarm 5 mit dem zweiten Schwenkarm 6 durch einen starren ersten Lenker 18 gekoppelt, so dass eine insgesamt parallelogrammartige Schwenkführung der beiden Säschare gegeben ist. Der Lenker 18 erstreckt sich im wesentlichen parallel zu einer die beiden Querträger 4 verbindenden Geraden.

Der erste Lenker 18 ist an den beiden Schwenkarmen 5 und 6 jeweils verschieblich in Längsrichtung des Lenkers 18 angelenkt, wobei die Anlenkung schwenkbar um eine zu den Schwenkachsen der Schwenkarme 5 und 6 parallele Achse ausgebildet ist. Die verschiebliche Anlenkung wird durch langlochartige Führungen und darin sitzende Anlenkbolzen erreicht. Wie Figur 1 zeigt, sind in dem ersten Lenker 18 an dessen gegenüberliegenden Enden Langlochführungen 19 ausgebildet. Nicht näher gezeigte Anlenkbolzen sind an den Schwenkarmen 5 und 6 befestigt und sitzen in den Langlochführungen 19.

Ein zweiter Lenker 20 koppelt gemäß Figuren 1 bis 4 den zweiten Schwenkarm 6 und über den ersten Lenker 18 auch den ersten Schwenkarm 5 mit dem dritten Schwenkarm 13. Wie Figur 1 zeigt, erstreckt sich der zweite Lenker 20 ebenfalls im wesentlichen parallel zu einer Geraden durch die Schwenkachsen des zweiten Schwenkarms 5 und des dritten Schwenkarms 13. Der zweite Lenker 20 ist dabei jeweils schwenkbar an dem Schwenkarm 6 und an dem Schwenkarm 13 angelenkt, und zwar um zu deren Schwenkachsen parallele Achsen. Im Gegensatz zu dem ersten starren Lenker 18 ist der zweite Lenker 20 jedoch an seinen Anlenkpunkten nicht längsverschieblich geführt. Stattdessen ist er in sich nach Art eines Teleskops längenveränderlich. Ein erster Lenkerteil 21 sitzt längsverschieblich gelagert in bzw. an einem zweiten Lenkerteil 22, wobei zwischen den beiden Lenkerteilen 21 und 22 eine Federeinrichtung 23 geschaltet ist, die den zweiten Lenker 20 in seine kürzeste Stellung vorspannt. Um eine Voreinstellung der Länge des zweiten Lenkers 20 vornehmen zu können, ist der erste Lenkerteil 21 in sich durch eine Längeneinstellvorrichtung 24 längeneinstellbar.

Im Betrieb arbeitet die Sämaschine und die Koppelung ihrer Drillhebel bzw. Säschar- und Bodenwalzenschwenkarme folgendermaßen: In der in Figur 1 gezeigten theoretischen Standardstellung stehen die Schwenkarme 5 und 6 in ihrer von der Gelenkspange 7 vorgegebenen Grundstellung. Ebenso ist der dritte Schwenkarm 13 in seiner durch den Anschlag 25, der am Querträger 10 ansteht, vorgegebenen Grundstellung. Dabei ist auch der zweite Lenker 20 in seiner durch die Federeinrichtung 23 vorgegebenen Grundstellung. Durch Einstellung der Längeneinstellvorrichtung 24 ist dabei die Stellung der Bodenwalze 14 relativ zu den Säscharen 8 bzw. 9 in geeigneter Weise angepasst worden. Die relative Höhe der Bodenwalze in dieser Grundstellung relativ zu den Säscharen ist durch Einstellung der Länge des oberen Trägers 11 des den Anlenkpunkt des dritten Schwenkarms 13 tragenden Zweischlags eingestellt worden.

Um in der Praxis die Säscharen in den Boden zu drücken, wird über die Dreipunktanlenkung auf den Maschinenrahmen 1 entsprechender Druck nach unten ausgeübt, so dass sich die in Figur 2 gezeigte praktische Standardstellung ergibt. Die ersten und zweiten Schwenkarme 5 und 6 sind entgegen der von der Gelenkspange 7 bewirkten Vorspannung leicht nach oben geschwenkt. Ebenso ist die Bodenwalze 14 bzw. der sie tragende Schwenkarm 13 leicht nach oben geschwenkt. Dabei sind die ersten und zweiten Schwenkarme 5 und 6 weiterhin in einer parallelen Stellung. Der zweite Lenker 20 ist in seiner Längen-Grundstellung.

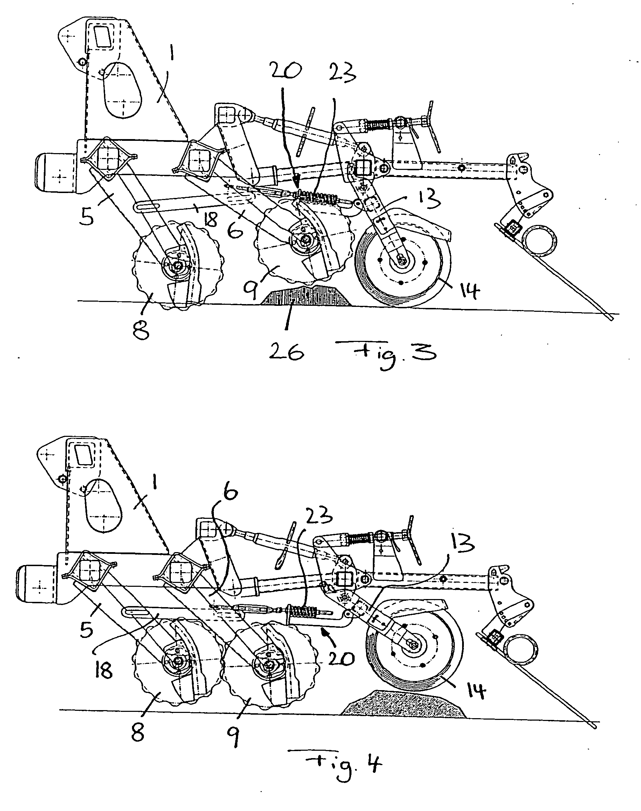

Fährt die Sämaschine über Bodenhindernisse wie beispielsweise Steine, können die Säscharen und auch die Bodenwalze 14 in begrenztem Maße individuell ausweichen. Fährt beispielsweise die zweite Säschar 9, wie in Figur 3 gezeigt, über einen Stein, so schwenkt der zweite Schwenkarm 6 entsprechend nach oben. Wird dabei das durch die Langlochführungen 19 mögliche Schwenkspiel nicht überschritten, verbleibt die erste Säschar davon unbeeinflusst in ihrer Arbeitsstellung. Ebenso verbleibt die Bodenwalze 14 in ihrer auf den Boden drückenden Arbeitsstellung, da der längenveränderliche zweite Lenker 20 die individuelle Ausweichbewegung des zweiten Schwenkarms 6 ausgleicht.

Fährt, wie Figur 4 zeigt, die Bodenwalze 14 über den Stein 26, schwingt der dritte Schwenkarm 13 entsprechend nach oben. Ist dies nur eine kleine Schwenkbewegung, werden die beiden Säscharen 8 und 9 in ihrer Arbeitsstellung bleiben bzw. nur leicht beeinflusst werden, da die Federeinrichtung 23 eine entsprechende Verlängerung des zweiten Lenkers 20 zulässt. Fährt der die Bodenwalze tragende Schwenkarm 13 jedoch weiter nach oben, wird die Kraft der Federeinrichtung 23 immer größer, so dass der zweite Lenker 20 den ersten Lenker 18 und damit bei Erreichen des Endes dessen Freigängigkeit auch den zweiten Schwenkarm 6 sowie die daran befestigte Säschar 9 sowie den ersten Schwenkarm 5 und die daran befestigte Säschar 8 nach oben zieht, wie dies Figur 4 zeigt.

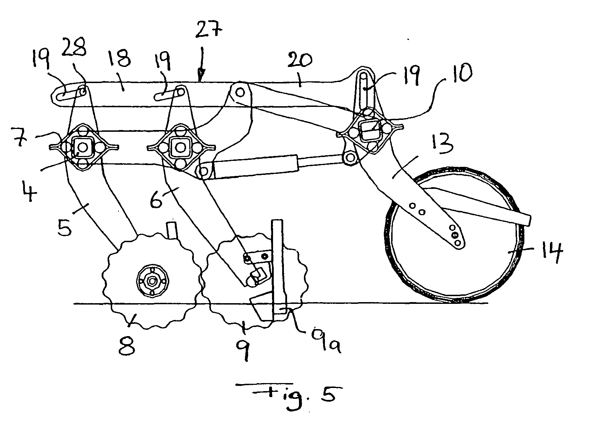

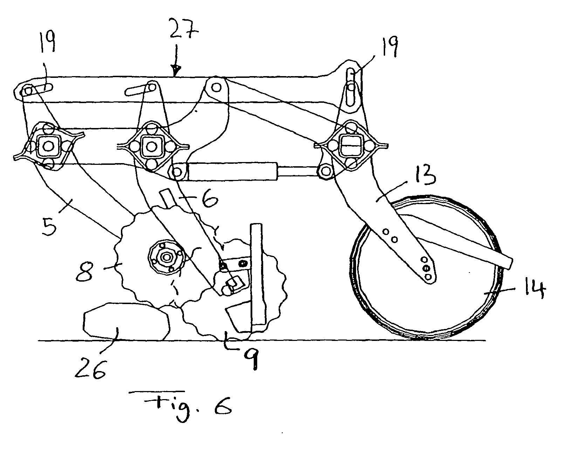

Die in den Figuren 5 bis 9 gezeigte Ausführung entspricht hinsichtlich der Anordnung der Schwenkarme sowie der daran befestigten Säschare bzw. Bodenwalze weitgehend der zuvor beschriebenen Ausführung, so dass auf deren Beschreibung verwiesen und für selbe Bauteile selbe Bezugszeichen verwendet sind. Die Ausführung unterscheidet sich hauptsächlich in der Ausbildung der die Schwenkarme verbindenden Lenker. Anstelle der separaten Ausbildung der Lenker der ersten Ausführungsform sind hier der erste Lenker 18 und der zweite Lenker 20 miteinander einstückig ausgebildet und oberhalb der Anlenkpunkte der Schwenkarme 5, 6 und 13 angeordnet. Wie Figur 5 zeigt, ist der insgesamt mit der Bezugsziffer 27 bezeichnete Lenker an allen drei Schwenkarmen 5, 6 und 13 jeweils verschieblich geführt. Hierzu weist der Lenker 27 drei Langlochführungen 19 auf, in denen an dem jeweiligen Schwenkarm 5, 6 bzw. 13 befestigte Anlenkbolzen 28 verschieblich sitzen. Die Langlochführungen 19 erstrecken sich mit ihrer Längsachse tangential zu der Schwenkachse des jeweiligen Schwenkarms 5, 6 bzw. 13, so dass die Schwenkarme 5, 6 und 13 jeweils ein begrenztes individuelles Schwenkspiel haben, d.h. sie können individuell relativ zu den jeweils anderen Schwenkarmen hin- und hergehende Schwenkbewegungen über einen begrenzten Schwenkwinkel ausführen. Im Betrieb ergibt sich damit entsprechend den Figuren 6 bis 8 die zuvor beschriebene Wirkungsweise beim Überfahren von Hindernissen.

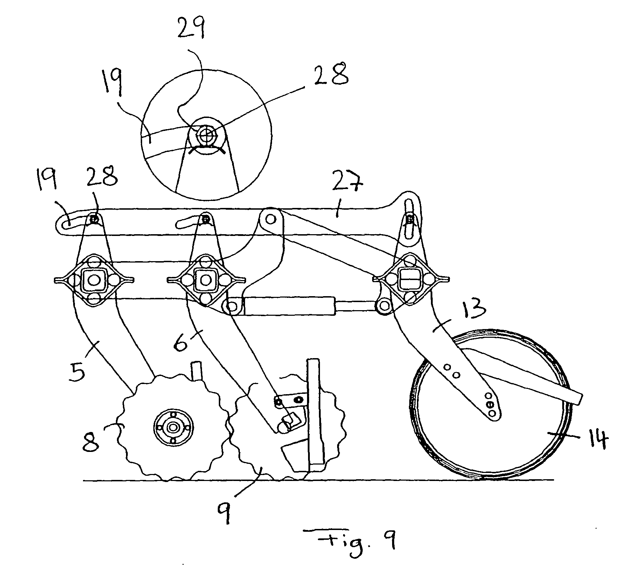

Wie Figur 9 zeigt, sind die Anlenkbolzen 28 vorteilhafterweise mit Mehrkantprofilierungen versehen. Die Mehrkantprofilierungen 29 können beispielsweise von auf üblichen Schraubbolzen sitzenden Muttern gebildet sein, die drehfest mit dem jeweiligen Schraubbolzen gesichert, insbesondere verschweißt sind. Erleidet ein Profilabschnitt übermäßigen Verschleiß, kann der Anlenkbolzen 28 bzw. seine Mehrkantprofilierung 29 um den Teilungswinkel der Mehrkantprofilierung weitergedreht und wieder drehfixiert werden, so dass ein bislang unverbrauchter Profilabschnitt in den Langlochführungen 19 geführt ist. Dabei sitzt der Anlenkbolzen 28 mit einem im Querschnitt kreisrunden Abschnitt in der Langlochführung. Die außerhalb der Langlochführung liegende Mehrkantprofilierung fixiert dabei die Drehstellung des Anlenkbolzens, der drehbar am jeweiligen Schwenkarm befestigt ist. Die Mehrkantprofilierung 29 kann dabei z. B. mit einer als Federplatte ausgebildeten Verdrehsicherung zusammenwirken, die am Schwenkarm oder am Lenker befestigt ist.

Eine weitere Ausführung zeigen die Figuren 10 bis 12, die hinsichtlich der Anordnung der Schwenkarme sowie der daran befestigten Säschare und Bodenwalze weitgehend den zuvor beschriebenen Ausführungen entspricht, so dass auf deren Beschreibung verwiesen und für selbe Bauteile selbe Bezugszeichen verwendet sind. Die Ausführung unterscheidet sich hauptsächlich in der Ausbildung der die Schwenkarme verbindenden Lenker sowie der Lagerung des Rahmenabschnitts, der den die Bodenwalze tragenden dritten Lenker trägt.

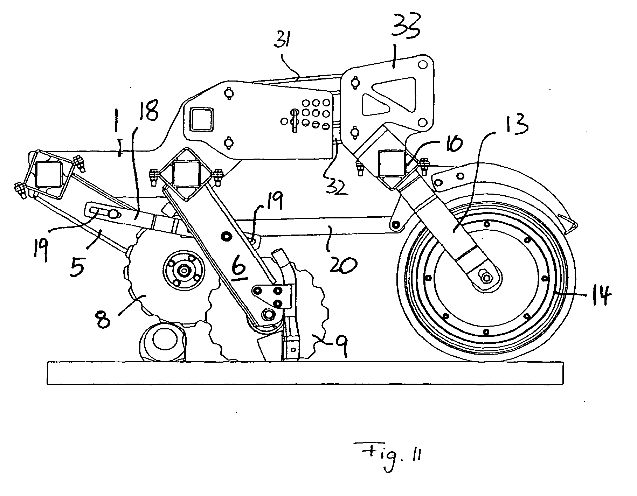

Wie die Figuren 10 und 11 zeigen, sind auch hier die ersten und zweiten Schwenkarme 5 und 6 durch einen ersten Lenker 18 bezüglich ihrer Schwenkbarkeit gekoppelt. Der genannte erste Lenker 18 ist einerseits drehbar an dem ersten Schwenkarm 5 und andererseits schwenkbar an dem zweiten Schwenkarm 6 angelenkt. Eine Langlochführung 19 an beiden Anlenkpunkten des ersten Lenkers 18 stellt dabei eine begrenzte rotatorische Freigängigkeit des ersten Schwenkarms 5 und des zweiten Schwenkarms 6 relativ zueinander sicher.

Der zweite Lenker 20 ist einerseits gelenkig an dem genannten ersten Lenker 18 und andererseits gelenkig an dem dritten Schwenkarm 13 angelenkt. Wie Figur 10 zeigt, ist die Anlenkung des zweiten Lenkers 20 an dem ersten Lenker 18 und dem dritten Schwenkarm 13 jeweils zwar drehbar, jedoch unverschieblich. Die gewünschte begrenzte rotatorische Freigängigkeit der ersten und zweiten Schwenkarme 5 und 6, die die Säschare 9 tragen, relativ zu dem dritten die Bodenwalze 14 tragenden Schwenkarm 13 wird durch die zuvor beschriebene Freigängigkeit des ersten Lenkers 18 gegenüber den ersten und zweiten Schwenkarmen 5 und 6 mittels der Langlochführungen 19 erreicht.

Figur 11 verdeutlicht die Wirkungsweise dieser Art der Lenkeranordnung. Fährt die an dem ersten Schwenkarm 5 gelagerte Säschar 9 auf ein Hindernis auf, kann die Säschar nach oben ausweichen, indem der erste Schwenkarm 5 gegen den Uhrzeigersinn nach oben schwenkt. Die Anlenkpunkte der ersten und zweiten Schwenkarme 5 und 6 an dem ersten Lenker 18 fahren dabei in den Langlochführungen 19 zusammen, so dass sich effektiv der Abstand der genannten Anlenkpunkte ändert (vgl. Figur 11). Der zweite Schwenkarm 6 hingegen erfährt noch keine Bewegung, solange die Langlochführungen 19 dies erlauben. Ebenso wird der dritte Schwenkarm 13 durch die Freigängigkeit des ersten Lenkers 18 über die Langlochführungen 19 noch nicht verschwenkt.

## Patentansprüche

1. Sämaschine mit einer ersten Säschar (8), die an einem ersten Schwenkarm (5) gelagert ist, einer zweiten Säschar (9), die an einem zweiten Schwenkarm (6) gelagert ist, sowie mit einer Bodenwalze (14), die an einem dritten Schwenkarm (13) gelagert ist, wobei die Schwenkarme (5, 6, 13) jeweils um eine im wesentlichen quer zur Fahrtrichtung verlaufende Schwenkachse gelagert sind, sowie mit einem ersten Lenker (18), durch den der erste Schwenkarm (5) mit dem zweiten Schwenkarm (6) gekoppelt ist, und einem zweiten Lenker (20), durch den zumindest der erste Lenker (18) mit dem dritten Schwenkarm (13) gekoppelt ist, wobei der erste Lenker (18) und der zweite Lenker (20) derart ausgebildet sind, dass die ersten und zweiten Schwenkarme (5, 6) über einen begrenzten Schwenkwinkelbereich ohne Zwangssteuerung relativ zueinander schwenkbar und über diesen Winkelbereich hinaus zwangsgesteuert miteinander sind, und dass die ersten und zweiten Schwenkarme (5, 6) relativ zu dem dritten Schwenkarm (13) über einen begrenzten Schwenkwinkelbereich ohne Zwangssteuerung schwenkbar und über diesen Winkelbereich hinaus zwangsgesteuert sind, wobei der zweite Lenker (20) unmittelbar an dem ersten Lenker (18) und an dem dritten Schwenkarm (13) angelenkt ist.

2. Sämaschine nach dem vorhergehenden Anspruch, wobei der erste Lenker (18) an dem ersten Schwenkarm (5) und/oder an dem zweiten Schwenkarm (6) über eine begrenzte Wegstrecke verschieblich angelenkt ist.

3. Sämaschine nach dem vorhergehenden Anspruch, wobei der erste Lenker (18) an seinem ersten und/oder an seinem zweiten Ende jeweils eine langlochartige Führung (19) aufweist, in der ein am ersten bzw. zweiten Schwenkarm (5, 6) befestigter Lagerbolzen verschieblich aufgenommen ist.

4. Sämaschine nach einem der vorhergehenden Ansprüche, wobei der zweite Lenker (20) an dem ersten Lenker (18) und dem dritten Schwenkarm (13) unverschieblich drehbar angelenkt ist und der erste Lenker sowohl an dem ersten wie auch an dem zweiten Schwenkarm (5, 6) jeweils längsverschieblich angelenkt ist.

5. Sämaschine nach einem der vorhergehenden Ansprüche, wobei der erste und/oder der zweite Lenker (18, 20) starr ausgebildet ist.

6. Sämaschine nach einem der Ansprüche 1 bis 3, wobei der erste und der zweite Lenker (18, 20) miteinander einstückig ausgebildet sind und einen an dem ersten, zweiten und dritten Schwenkarm (5, 6, 13) angelenkten Lenker (27) bilden.

7. Sämaschine nach einem der vorhergehenden Ansprüche, wobei zur jeweiligen Anlenkung des ersten und/oder zweiten Lenkers (18, 20) am jeweiligen Schwenkarm (5, 6, 13) Anlenkbolzen (28) mit einem Mehrkantprofilteil (29) vorgesehen sind, das in Langlochführungen (19) verschieblich aufgenommen ist und in mehreren Drehstellungen in die jeweilige Langlochführung einsetzbar ist.

8. Sämaschine nach einem der vorhergehenden Ansprüche, wobei eine Höheneinstellvorrichtung (11) zur Höheneinstellung des Anlenkpunkts des dritten Schwenkarms (13) relativ zur Höhe des Anlenkpunkts des ersten und/oder zweiten Schwenkarms (5, 6) vorgesehen ist.

9. Sämaschine nach dem vorhergehenden Anspruch, wobei die Höheneinstellvorrichtung (11) verdrehungsfrei arbeitend ausgebildet ist.

10. Sämaschine nach dem vorhergehenden Anspruch, wobei ein Rahmenabschnitt, an dem ein Bodenbearbeitungswerkzeug, insbesondere Striegel (16), aufmontiert ist und auch der die Bodenwalze (14) tragende dritte Schwenkarm (13) gelagert ist, durch eine verdrehungsfrei arbeitende Parallelogrammführung (30) relativ zu einem Rahmenabschnitt, an dem der erste und/oder zweite Schwenkarm (5, 6) gelagert ist, höheneinstellbar ist.

## Claims

1. A sowing machine comprising a first sowing share (8) journalled on a first pivot arm (5), a second sowing share (9) journalled on a second pivot arm (6), and comprising a ground roller (14) which is journalled on a third pivot arm (13), wherein the pivot arms (5, 6, 13) are each journalled around a pivot axis extending substantially transversely to the direction of travel, as well as comprising a first bar (18) by which the first pivot arm (5) is coupled to the second pivot arm (6) and a second bar (20) by which at least the first bar (18) is coupled to the third pivot arm (13), wherein the first bar (18) and the second bar (20) are configured such that the first and second pivot arms (5, 6) can be pivoted relative to one another over a limited pivot angle range without any positive control and are positively controlled with one another beyond this angle range and such that the first and second pivot arms (5, 6) can be pivoted relative to the third pivot art (13) over a limited pivot angle range without any positive control and are positively controlled beyond this angle range, wherein the second bar (20) is directly pivoted at the first bar (18) and at the third pivot arm (13).

2. A sowing machine in accordance with the preceding claim, wherein the first bar (18) is displaceably pivoted at the first pivot arm (5) and/or at the second pivot arm (6) over a limited path.

3. A sowing machine in accordance with the preceding claim, wherein the first bar (18) in each case has a guide (19) in the manner of an elongate hole at its first end and/or at its second end, with a bearing pin fastened to the first or second pivot arm (5, 6) being displaceably received in said guide.

4. A sowing machine in accordance with any one of the preceding claims, wherein the second bar (20) is non-displaceably rotatably pivoted at the first bar (18) and at the third pivot arm (13) and the first bar is longitudinally displaceably pivoted in each case both at the first and at the second pivot arm (5,6).

5. A sowing machine in accordance with any one of the preceding claims, wherein the first and/or the second bar (18, 20) is made in rigid form.

6. A sowing machine in accordance with any one of the claims 1 to 3, wherein the first and the second bars (18, 20) are made integrally with one another and form a bar (27) pivoted at the first, second and third pivot arms (5, 6, 13).

7. A sowing machine in accordance with any one of the preceding claims, wherein pivot pins (28) having a multi-edged profile (29), which is displaceably received in elongated hole guides (19) and can be inserted into the respective elongated hole guide in a plurality of rotary positions, are provided at the respective pivot arm (5, 6, 13) for the respective pivoting of the first and/or second bar (18, 20).

8. A sowing machine in accordance with any one of the preceding claims, wherein a vertical adjustment device (11) is provided for the vertical adjustment of the pivot point of the third pivot arm (13) relative to the height of the pivot point of the first and/or second pivot arms (5, 6).

9. A sowing machine in accordance with the preceding claim, wherein the vertical adjustment device (11) is configured to work free of rotation.

10. A sowing machine in accordance with the preceding claim, wherein a frame portion on which a ground working tool, in particular a harrower (16), is mounted and on which the third pivot arm (13) supporting the ground roller (14) is also supported is vertically adjustable by a parallelogram guide (30) working free of rotation relative to a frame portion on which the first and/or second pivot arms (5, 6) are supported.

## Revendications

1. Semoir comportant un premier soc semeur (8), qui est monté sur un premier bras pivotant (5), un deuxième soc semeur (9) qui est monté sur un deuxième bras pivotant (6), ainsi qu'un rouleau d'appui du sol (14) qui est monté sur un troisième bras pivotant (13), les bras pivotants (5, 6, 13) étant montés chacun de manière à pivoter autour d'un axe de pivotement sensiblement perpendiculaire à la direction de déplacement, ainsi qu'une première biellette (18), par laquelle le premier bras pivotant (5) est couplé au deuxième bras pivotant (6), et une deuxième biellette (20), par laquelle au moins la première biellette (18) est couplée au troisième bras pivotant (13), la première biellette (18) et la deuxième biellette (20) étant conçues de telle sorte que le premier et le deuxième bras pivotant (5, 6) sont couplés entre eux de manière pivotante l'un par rapport à l'autre sans guidage forcé sur une zone angulaire de pivotement limitée et sont couplés entre eux par guidage forcé au-delà de cette zone angulaire de pivotement limitée et de telle sorte que le premier et le deuxième bras pivotant (5, 6) sont couplés de manière pivotante par rapport au troisième bras pivotant (13) sans guidage forcé sur une zone angulaire de pivotement limitée et sont couplés par guidage forcé au-delà de cette zone angulaire de pivotement limitée, la deuxième biellette (20) étant articulée directement sur la première biellette (18) et sur le troisième bras pivotant (13).

2. Semoir selon la revendication précédente, dans lequel la première biellette (18) est articulée contre le premier bras pivotant (5) et/ou contre le deuxième bras pivotant (6) de manière mobile en translation sur un trajet limité.

3. Semoir selon la revendication précédente, dans lequel la première biellette (18) comporte au niveau de sa première et/ou de sa deuxième extrémité respectivement un guidage (19) en forme de trou oblong, dans lequel est logé de manière mobile en translation un boulon d'appui fixé contre le premier ou le deuxième bras pivotant (5, 6).

4. Semoir selon l'une quelconque des revendications précédentes, dans lequel la deuxième biellette (20) est montée rotative et immobile en translation contre la première biellette (18) et contre le troisième bras pivotant (13), et la première biellette est montée de manière mobile dans le sens longitudinal respectivement contre le premier et le deuxième bras pivotant (5, 6).

5. Semoir selon l'une quelconque des revendications précédentes, dans lequel la première et/ou la deuxième biellette (18, 20) sont réalisées de manière rigide.

6. Semoir selon l'une quelconque des revendications 1 à 3, dans lequel la première et la deuxième biellette (18, 20) sont réalisées d'un seul tenant l'une avec l'autre et forment une biellette (27) montée contre le premier, le deuxième et le troisième bras pivotant (5, 6, 13).

7. Semoir selon l'une quelconque des revendications précédentes, dans lequel pour le montage respectif de la première et/ou deuxième biellette (18, 20) contre le bras pivotant (5, 6, 13) respectif, il est prévu des boulons d'articulation (28) avec une pièce à profil polygonal (29), qui sont logés de manière mobile en translation dans des guidages (19) en trou oblong et peuvent être utilisés dans plusieurs positions de rotation dans le guidage en trou oblong respectif.

8. Semoir selon l'une quelconque des revendications précédentes, dans lequel il est prévu un dispositif de réglage de la hauteur (11) pour régler la hauteur du point d'articulation du troisième bras pivotant (13), par rapport à la hauteur du point d'articulation du premier et/ou du deuxième bras pivotant (5, 6).

9. Semoir selon l'une quelconque des revendications précédentes, dans lequel le dispositif de réglage de la hauteur (11) est réalisé de manière à fonctionner sans rotation.

10. Semoir selon l'une quelconque des revendications précédentes, dans lequel une partie de bâti, sur laquelle est monté un outil de travail du sol, en particulier une étrille (16), et sur laquelle est également monté le troisième bras pivotant (13), portant le rouleau d'appui du sol (14), peut être réglé en hauteur, par l'intermédiaire d'un parallélogramme articulé (30), fonctionnant sans rotation, par rapport à une partie de bâti contre laquelle sont montés le premier et/ou le deuxième bras pivotant (5, 6) .
